# EUROPEAN PATENT SPECIFICATION

(11) **EP 4 219 889 B1**
(45) Date of publication and mention of the grant of the patent: **15.01.2025**
(21) Application number: 22212866.2
(22) Date of filing: 12.12.2022
(51) Int. Cl.: E21B 41/00, E21B 43/16

(54) **ENHANCED CARBON DIOXIDE SEQUESTRATION USING NANOBUBBLES AND GAS-LIQUID MIXTURES**
VERBESSERTE KOHLENDIOXIDSEQUESTRIERUNG MIT NANOBLASEN UND GAS-FLÜSSIGKEITS-GEMISCHEN
SÉQUESTRATION AMÉLIORÉE DE DIOXYDE DE CARBONE À L'AIDE DE NANOBULLES ET DE MÉLANGES GAZ-LIQUIDE

(30) Priority: 26.01.2022 US 202263303060 P; 15.09.2022 US 202217932363
(43) Date of publication of application: 02.08.2023
(73) Proprietor: PROTOSTAR GROUP LIMITED, London EC4N 6EU (GB)
(72) Inventor: HASAN, Talal, PC 116 Muscat (OM); TASFAI, Ehab, PC 116 Muscat (OM); MATTER, Juerg, Winchester, SO22 6DF (GB)
(74) Representative: Kransell & Wennborg KB

(56) References cited:
- US-A1- 2020 316 515
- UEMURA SUGURU ET AL: "Injection of nanosized CO2droplets as a technique for stable geological sequestration", INTERNATIONAL JOURNAL OF GREENHOUSE GAS CONTROL, ELSEVIER, AMSTERDAM, NL, vol. 45, 22 December 2015 (2015-12-22), pages 62 - 69, XP029394594, ISSN: 1750-5836, DOI: 10.1016/J.IJGGC.2015.12.011
- AHMED AHMED KHALED ABDELLA ET AL: "Generation of nanobubbles by ceramic membrane filters: The dependence of bubble size and zeta potential on surface coating, pore size and injected gas pressure", CHEMOSPHERE, PERGAMON PRESS, OXFORD, GB, vol. 203, 28 March 2018 (2018-03-28), pages 327 - 335, XP085383476, ISSN: 0045-6535, DOI: 10.1016/J.CHEMOSPHERE.2018.03.157
- VYACHESLAV ROMANOV ET AL: "Mineralization of Carbon Dioxide: A Literature Review", CHEMBIOENG REVIEWS, JOHN WILEY & SONS, INC, HOBOKEN, USA, vol. 2, no. 4, 11 May 2015 (2015-05-11), pages 231 - 256, XP072274568, ISSN: 2196-9744, DOI: 10.1002/CBEN.201500002

## Description

### TECHNICAL FIELD

The present disclosure relates to an environmental solution relying on CO₂ storage and enhanced CO₂ mineralization in mafic and ultramafic rocks. More specifically, the present disclosure relates to a method for enhanced CO₂ storage and mineralization by forming nanobubbles of CO₂ gas in a fluid mixture that is injected through a borehole into a geological formation for mineralisation and/or storage.

### BACKGROUND

The race to enhance and increase the removal of CO₂ from the environment is leading to a number of innovations in this area, from rapid removal of CO₂ from the atmosphere ranging to the collection of CO₂ at the source of emission or from industrial processes. Innovation concerning various means of measurement of the rate and quantity of mineralized and stored CO₂ is also a related area.
The oceans take up CO₂ from the atmosphere and are responsible for absorbing around a third of the CO₂ emitted by fossil fuel burning, deforestation, and cement production since the industrial revolution. While this is beneficial in terms of limiting the rise in atmospheric CO₂ concentrations and hence global warming, the so-called greenhouse effect, there are direct consequences for ocean chemistry. Ocean acidification describes the lowering of seawater pH and carbonate saturation that results from increasing atmospheric CO₂ concentrations. There are also indirect and potentially adverse biological and ecological consequences of the chemical changes currently taking place in the oceans and as projected into the future. Enhanced CO₂ mineralization is a recognized way to store and or mineralise CO₂ underground or above ground. There is a need for an innovative process for CO₂ gas-liquid injection for underground storage and/or mineralisation which may provide for higher mass transfer ratios and buffer capacities when compared to traditional technologies, thereby increasing dissolution rates and concentrations of CO₂ within a fluid-mixture.

US2020316515 A1 discloses "carbon storage in basalts" (CSB) and the technique for storage of CO₂ is to dissolve the CO₂ in water and store it in basalts.

Suguru Uemura et al., Injection of nanosized CO2 droplets as a technique for stable geological sequestration, Int J Greenhouse Gas Control, Vol. 45, 22 December 2015, pages 62-69, describes stabilizing encapsulated droplets of CO₂ which are then sufficiently stable to remain in this form and not float to the surface.

There are, however, improvements to be made over the prior art.

### SUMMARY

The present disclosure provides a method wherein gas nanoparticles or nanobubbles of CO₂ gas are injected and dissolved on-surface (e.g., above ground) in a storage tank or injection pipes. Compared to traditional sparging technologies that often result in gas bubble sizes in the micron level, this method proved to be more efficient. Micron-sized bubbles have proved to be challenging to handle during on-surface sparging because of the larger size of these bubbles, and there is a higher potential for coalescence of micron-sized bubbles to take place while injected into a fluid stream. Coalescence would in turn result in the formation of even increasingly larger bubble sizes. These coalesced larger bubble sizes would rise faster and quickly to the surface of the injection fluid. Once at the surface of the fluid, these bubbles would burst due to the buoyancy effect, releasing the CO₂ back into the atmosphere resulting in decreased efficiency of CO₂ mineralization. This is highly challenging to control when injecting large volumes of CO₂ rich fluids at greater depths due to the increasing hydrostatic pressures. However, with the proposed CO₂ gas-liquid injection process for underground CO₂ storage and/or mineralization, there is a reduced effect of coalescence and buoyancy as the CO₂ is injected in the form of nanobubbles and dissolved into a pressurized fluid-mixture stream.

Accordingly, a first aspect of the disclosure relates to a method of carbon dioxide mineralization and storage comprising the steps of:
- generating CO₂ nanobubbles in a fluid forming a carbon dioxide and fluid mixture,
- injecting said mixture into a rock formation comprising mafic or ultramafic rock via an injection well wherein the carbon dioxide and fluid mixture is flowed through said injection well or an injection well casing disposed in the rock formation,
- reacting carbon dioxide in said carbon dioxide and fluid mixture with said rock formation to form calcites and magnesites in the rock formation; and
- recycling at least a portion of the fluid from said rock formation via an observation well.

In an embodiment of said aspect, the CO₂ nanobubbles are generated using a nanobubble membrane generator.

In another embodiment of said aspect, freely combinable with all aspects and embodiments, the injection well and/or injection well casing has a plurality of longitudinal perforations at a depth of 25 m to 4 km in said rock formation.

In another embodiment of said aspect, also freely combinable with all aspects and embodiments, the fluid is an aqueous fluid, selected from the group consisting of water, seawater, and brackish water. Preferably the fluid also comprises a conservative tracer. By the term conservative tracer is herein meant a tracer or marker substance / indicator substance which is not lost in the system and can be recovered and/or detected. One example is fluorescein, which is stable at least during shorter periods of time (days) but which then degrades biologically.

In another embodiment of said aspect, said nanobubble generator comprises: a pump, an inlet, a gas pressure gauge, a gas connection, a gas flow meter, a pump pressure gauge, and a discharge flow valve. Preferably the CO₂ nanobubble generator operates at a pressure in an interval of 1 - 1000 bar, preferably 5 - 500 bar, such as 25 - 100 bar. Most preferably the pressure is about 50 bar, such as 50 bar ± 10%. Preferably the generated CO₂ nanobubbles have an average diameter of about 10 - 900 nm, or 25 - 750 nm, or preferably 50 - 500 nm, more preferably 60-500 nm.

In another embodiment of said aspect, also freely combinable with all aspects and embodiments, said injection and observation wells have substantially the same depth.

In yet another embodiment of said aspect, also freely combinable with all aspects and embodiments, the method comprises a step of adjusting the fluid flow rate at one or more permeable zones by selecting a length and a distribution of the longitudinal perforations. Preferably the length of the longitudinal perforations is at least 15 cm and the distribution along the injection well casing is adapted to the depth and extent of said one or more permeable zones.

In another embodiment of said aspect, also freely combinable with all aspects and embodiments, a high-pressure zone is created within said injection well below a packed off interval during the injecting and a low-pressure zone is created during the recycling through the observation well.

In another embodiment of said aspect, also freely combinable with all aspects and embodiments, carbon dioxide and fluid mixture flows from a high-pressure zone to a low-pressure zone and a fluid volume of the carbon dioxide and water mixture is recycled back through at least one observation well.

In another embodiment of said aspect, also freely combinable with all aspects and embodiments, the rate of mineralization is enhanced by heating the water before pumping it into the mafic or ultramafic layer.

Another aspect relates to a system for carbon dioxide mineralization and storage comprising a nanobubble generator, a water storage module or buffer tank, pumps, at least two boreholes, wherein said pumps are arranged to inject a mixture of CO₂ nanobubbles and water into one borehole, and to recover water from another borehole, recirculating water to said water storage module or buffer tank.

The present aspects and embodiments have several advantages over existing technologies since they provide higher mass transfer rate; thermodynamically metastable bubbles that can remain suspended in fluids for extended periods of time; higher buffer capacities; higher CO₂ mineralisation or storage volumes; allow for a reduced depth of CO₂ injection; and reduced amounts of fluid to be injected.

One embodiment of the present disclosure involves the drilling of vertical and/or horizontals wells into mafic or ultramafic rock formation and injecting water rich of nanobubbles of CO₂ to react with said rocks producing carbonate rocks and thereby permanently entrapping CO₂.

Another embodiment of the present disclosure involves a method to decrease the amount of fluid required to achieve CO₂ mineralization. By utilizing nanobubbles, a higher CO₂ concentration can be obtained in the same volume of fluid resulting in an enhanced efficiency due to increased mass transfer properties. This also means that injection depths can be shallower making it more feasible to store/mineralize CO₂ already at depths of 25 - 1000 mbgl (metres below ground level), such as 50 - 500 mbgl, or about 100 mbgl.

### BRIEF DESCRIPTION OF THE DRAWINGS

The drawings show embodiments of the disclosed subject matter for the purpose of illustrating the invention and embodiments thereof. However, it should be understood that the present application is not limited to the precise arrangements and instrumentalities shown in the drawings, wherein:

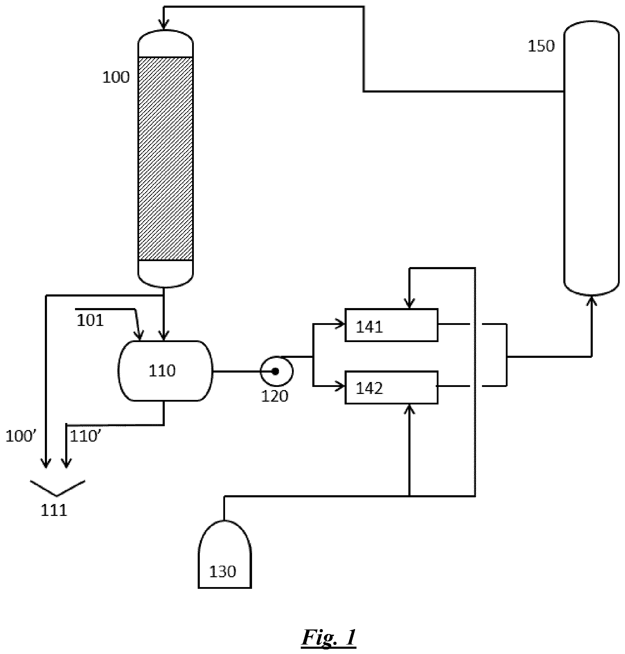

FIG. 1 shows a process flow diagram of an experimental set-up, showing a reaction vessel 100 containing coarsely crushed peridotite rock samples, a buffer tank 110, and a dissolution tank 150. In operation, makeup water is fed through inlet 101 into the buffer tank 110 and fed using pump 120 to one of two nanobubble generators 141 and 142 installed in parallel and operated individually or simultaneously. Gaseous CO₂ is fed from a pressurized tank 130 into the active nanobubble generator. Process liquid, e.g. water containing nanobubbles is fed to a dissolution vessel 150, and the overflow recirculated to the reaction vessel 100. The amount of process liquid can be regulated by addition of makeup water through inlet 101 and/or by discharging liquid from the reaction vessel 100 through outlet 100' or from the buffer tank 110 through outlet 110' into a drain 111.

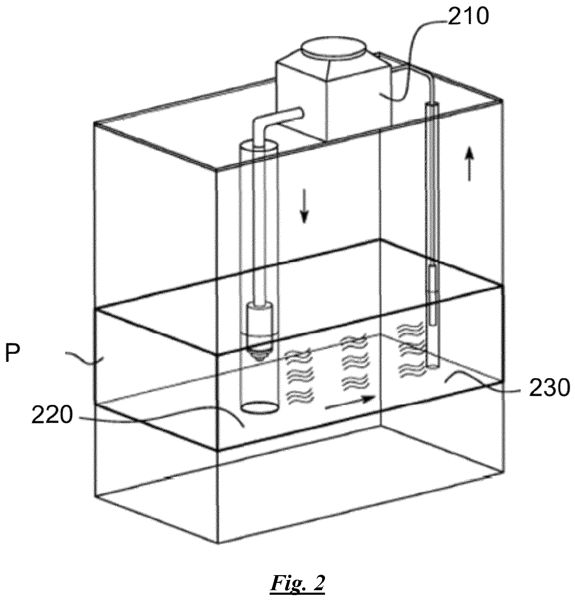

FIG. 2 is a schematic representation of an embodiment of the disclosed subject matter showing a water looping system comprising a water storage module 210, at least two boreholes, an injection well 220 and an observation well 230, both extending into a mafic or ultramafic formation here indicated as the layer P. The injection well is packed or sealed off at the upper level of the layer P forcing the mixture of carbon dioxide and water to enter the cracks in the mafic or ultramafic formation. The degree of mineralisation can be observed by taking and analysing samples of water collected in the observation well. Using a marker substance, preferably a conservative tracer, e.g. fluorescein, the flow of water between the injection well and the observation well can be measured. The observation well is also used for collecting and recirculating water.

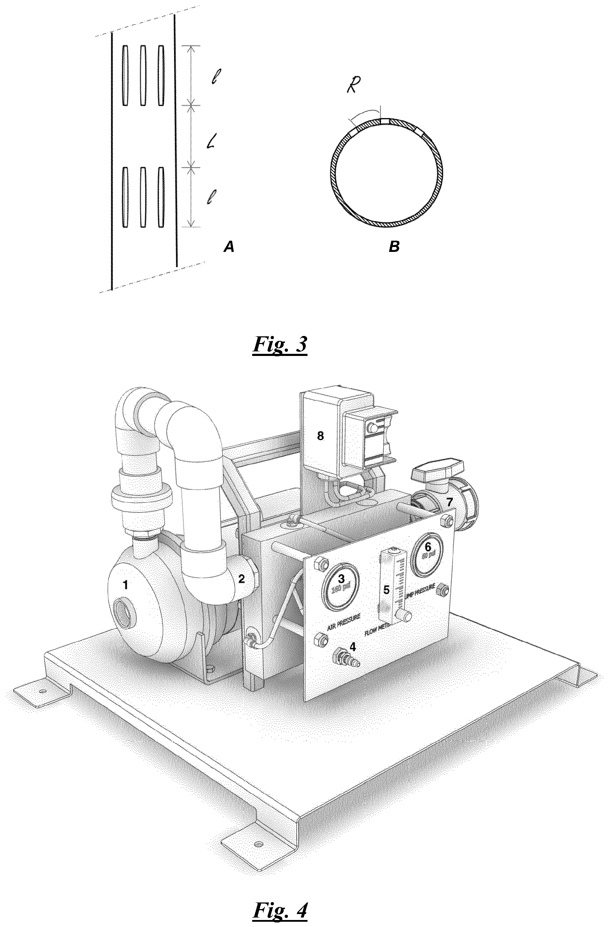

FIG. 3 is a schematic representation of an engineered well casing having perforations, for example slits of a certain length (l) and distance (L), distributed at a certain distance (R) along the circumference of the casing. These dimensions, such as the length and width of each slit, the distance between them and their distribution along the circumference of the casing can be modified so that the flow and pressure of the carbon dioxide and fluid mixture pumped into the rock is adjusted as desired.
FIG. 4 shows an example of an arrangement for generating nanobubbles; here comprising the following components: a pump 1, an inlet 2, a gas pressure gauge 3, a gas inlet or connection for pressurized gas 4, a gas flow meter 5, a pump pressure gauge 6, a discharge flow valve 7, and a starter 8; and

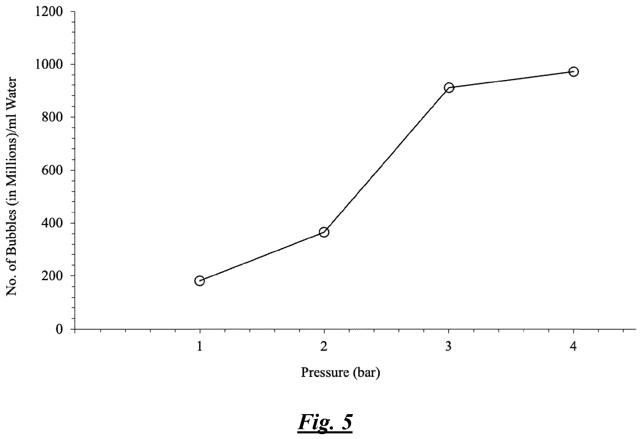

FIG. 5 is a graph showing the amount of bubbles (millions/ml) as a function of the pressure (barG, gauge pressure).

### DETAILED DESCRIPTION

Objects, features, and advantages of the present invention will become apparent from the following detailed description.

Herein, the use of the word "a" or "an" when used in conjunction with the term "comprising" in the claims and/or the specification may mean "one," but it is also consistent with the meaning of one or more," "at least one," and "one or more than one." The term "about" means, in general, the stated value plus or minus 5 %. The use of the term "or" in the claims is used to mean "and/or" unless explicitly indicated to refer to alternatives only or the alternative are mutually exclusive, although the disclosure supports a definition that refers to only alternatives and "and/or".

Referring now to FIG. 1, the experimental set-up embodies a process for dispersing CO₂ gas into a fluid for the purpose of forming nanobubbles. In the experimental set-up, a reactor vessel 100 was filled with crushed rock samples to represent the mafic or ultramafic rock formation. In a field trial and in full-scale operation, the carbon dioxide nanobubbles and fluid mixture is pumped into one or more boreholes extending into a mafic or ultramafic rock layer. In this experimental set-up, as well as in large scale operation in the field, the process is intended to be substantially closed, minimizing the water consumption.

Exemplary laboratory and/or field trial scale processes have utilized a fluid mixture that was originally stored on-surface and was pumped at a pressure of about 10 bar, CO₂ injection mass flow rate of about 0.46 g/s, H₂O injection flow rate of about 0.15 l/s and an injection depth of about 110 mbgl into the injection well. Other conditions such as a pressure of 5-50 bar preferably 10-40 bar or 15-30 bar, a CO₂ injection mass flow rate of 0.05-5 g/s, preferably 0.25-2.5 g/s or 0.5-1.5 g/s, an H₂O injection flow rate of 0.5-10 l/s, 1-5 l/s or about 2.5 l/s, and an injection depth of 25-1000 mbgl, 50-500 mbgl or about 100 mbgl can also be used.

A flow of pressurized CO₂ (at a pressure in an interval of 1-1000 bar, such as 5-500 bar, preferably 25 - 100 bar, and most preferably about 50 bar) is regulated through a manifold and a set of mass flow controllers prior to injection into the pressurized fluid mixture stream. Calculated mass flow set points control the overall CO₂ injection process in relation to fluid mixture flows. For an example, to inject 1 metric tonne of CO₂ per day in the 900 mbgl zone, a fluid mixture flow rate of 18 l/min and 40 bar pressure are preferably used. These values (e.g., pressure, CO₂ injection mass flow rate, H₂O injection flow rate, injection depth, mass flow set points, and fluid mixture flow rate are only exemplary and can be scaled upwards for commercial scale processes by a factor of 10×, 100×, 1,000×, 10,000× and/or 100,000×.

Referring to FIG. 2, some embodiments of the disclosed invention include a water looping or recirculation system including pumps (not shown) and a water storage module (210), a carbon dioxide injection module and injection well (220), a mafic or ultramafic formation, here schematically illustrated as a horizontal layer (P), and an observation well module (230) for monitoring and controlling carbonation reactions. The process begins by identifying a suitable location with the rock layer being preferably at least 0.1 km thick or at least 0.5 km thick. An injection borehole is drilled into this rock layer. Said borehole is preferably at least 0.1 km, preferably at least 0.5 km deep and up to a maximum of 1.8 km in depth with the preferred depth being between 0.8 to 1.2 km deep or about 1 km mbgl. An observation borehole is drilled alongside the injection borehole with hydraulic connection between the two holes. The injection borehole is fitted with an engineered well casing (preferably steel or concrete) which is perforated at the targeted areas for mineralization in the geological formation (see FIG 3 and the text further below for more details). In the continuous injection process water is first pumped from the observation borehole or another source to a buffer storage tank on surface. The buffer tank is fitted to receive water from different sources such as underground water resources, seawater, treated water etc. The water, at ambient temperature, is then pumped at pressure through the injection pipeline to the injection borehole well head by using a set of booster pumps. The formation temperature at 1 km depth is about 60 - 80°C.

Referring to FIG. 4, this embodiment shows an example of a nanobubble generator. Here, the generator comprises a pump (1), an inlet (2), a gas pressure gauge (3), a gas connection (4), a gas flow meter (5), a pump pressure gauge (6), a discharge flow valve (7), and a starter (8). The nanobubble generator typically operates at flow rate of 6-45 m³/hr and a maximum liquid pressure of 1.5 barG (gauge pressure). Typical operating conditions include a temperature of 5-60°C, preferably 30-40°C, and a CO₂ pressure of 1-8.5 barG, preferably 3-4 barG.

There are various methods and corresponding equipment for generating gas nanoparticles or nano bubbles in a liquid. The main methods are based on decompression, hydrodynamic cavitation, or membrane technology. Hydrodynamic cavitation can be achieved for example by ultrasonication or high-shear methods. The generation of nanobubbles is a complex physicochemical process that depends significantly on several parameters, including temperature, electrolyte concentration, dissolved gas concentration in solution as well as type and concentration of reagents, see e.g. Sabereh Nazari et al., Recent developments in generation, detection and application of nanobubbles in flotation, Minerals, 2022, 12, 462.

Another embodiment of the present disclosure is a programmable logic controller that automates the CO₂ injection process by controlling the CO₂ mass flow controllers, fluid-mixture booster pumps and respective valves to enhance CO₂ mass transfer ratios into the fluid mixture stream and achieving maximum buffer capacities per unit volume.

In an embodiment of this disclosure, the proposed gas-liquid injection process involves bubble sizes of 10-900 nm, 25-750 nm or 50-500 nm, preferably 60-500 nm in average diameter in fluid-mixtures. The bubbles are neutrally buoyant and can remain suspended in fluids for a period of time from 15 days up to 3 months without rising to the surface. This allows for shallower injection, higher gas transfer ratio, as well as increased CO₂ concentration in fluids. Experiments have shown an enhanced mass transfer coefficient of 0.35 h⁻¹ which is 11-fold better than what is achieved with regular bubble sizes, e.g., bubbles having an average diameter in the micron range.

In a further preferred embodiment of the present disclosure, CO₂ gas-liquid injection relies on nanobubble membrane generators that generate billions of CO₂ bubbles. Referring to FIG. 5, at 2 barG (gauge pressure) the average count was 3.66 × 10^8 bubbles per ml; at 3 barG the average count was 9.1 × 10^8 bubbles per ml; and at 4 barG the average count was 9.71 × 10^8 bubbles per ml.

A nanoparticle analyser (NanoSight NS300, Malvern Panalytical Ltd., United Kingdom) operating according to the principle of light scattering was used to measure average number and size of the bubbles through Brownian motion estimations. The analyser incorporated three lasers with different wavelengths and a colour camera to visualize the displacement of bubbles from 10 nm to 15 microns. Displacement is interpreted as Brownian motion, or, for larger bubbles, settling or creaming and can therefore be readily converted to particle size for each bubble, allowing highresolution size distribution analysis. Same technique is also used to measure average bubble number and density for a specific volume of fluid. The analyser uses a cuvette that includes a black insert which houses a magnetic stir bar to keep larger bubbles suspended and mix the bubbles between videos. Samples were continuously collected from nanobubble membrane generators and transferred directly into the system cuvette without further preparation to measure average bubble size and density.

The nanobubbles are then injected at high pressure (>25 bar) into a fluid-mixture. The generated nanobubbles' buoyancy is insignificant allowing for extended suspension times within a fluid resulting in increased mass transfer within the fluid. The nanobubbles are thermodynamically metastable allowing for high residence time in fluids up to a few months.

Mafic and ultramafic rocks can contain silicate minerals including olivine, serpentine, pyroxene and plagioclase. Olivine rocks often contain magnesium, oxygen, and silicon. Olivine is the most abundant mineral in the earth's mantle until a depth of 700 km. The composition is usually a combination of SiO₄ and Mg²⁺ and minor amounts of Ca²⁺. Typically, silicon bonds with 4 oxygen molecules forming a pyramid structure so that the charges of cations and anions are balanced, and Mg²⁺ occupies the empty space between the SiO₄ structure. These bonds can be easily triggered to react with carbonic acid. The reaction of olivine with CO₂ can be accomplished by the following reaction pathway:

MgSiO₄ + 2 CO₂ → 2 MgCO₃ + SiO₂ [1]

It is also proven that the rate of reaction increases significantly when water is introduced. Water aids the solubilization of CO₂ forming carbonic acid and therefore makes the mineralization and ion exchange process far easier and more efficient. Below is the reaction pathway in the presence of water:

CO₂ + H₂O → H₂CO₃ → H⁺ + HCO₃⁻ [2]

Mg₂SiO₄ + 4 H⁺ → Mg₂+ + SiO₂ + 2 H₂O [3]

Mg²⁺ + HCO₃⁻ → MgCO₃ + H⁺ [4]

Some mafic and ultramafic rocks contain mainly the minerals olivine and pyroxene. In the presence of water and CO₂, the following reaction occurs:

4Mg₂SiO₄ (olivine) + CaMgSi₂O₆ (pyroxene) + CO₂ + 7H₂O → 3Mg₃Si₂O₅(OH)₄ (serpentine) + CaCO₃ (calcite) [5]

Another aspect concerns a method for carbon dioxide sequestration utilizing pyroxene minerals. Pyroxene is one of the groups in an inosilicate mineral, which is also abundantly found out in mafic and ultramafic rocks. The general chemical formula for pyroxene is XY(Z)₂O₆, in which X is an ion such as Na⁺, Ca²⁺, Mn²⁺, Fe²⁺, Mg²⁺, or Li⁺, and Y is Mn²⁺, Fe²⁺, Mg²⁺, Fe³⁺, Al³⁺, Cr³⁺, or Ti⁴⁺ and Z is Si⁴⁺ or Al³⁺. Most commonly, pyroxene can often be found as Mg₂SiO₄ and CaMgSi₂O₆. Naturally, pyroxenes react with CO₂ according to the following equations:

Mg₂SiO₄ + 2 CO₂ → 2 MgCO₃ + SiO₂ [6]

CaMgSi₂O₆ + 2CO₂ → CaMg(CO₃)₂ + 2SiO₂ [7]

However, similar to olivine, water increases the rate of reaction, therefore, in presence of water, below is the reaction pathway for a reaction between CO₂ and pyroxene:

4Mg₂SiO₄ + CaMgSi₂O₆ + CO₂ + 6H₂O → 3Mg₃Si₂O₅(OH)₄ + CaCO₃ [8]

CaAl₂Si₂O₈ + CO₂ + 2H₂O → CaCO₃ + Al₂Si₂O₅(OH)₄ [9]

The present disclosure relates to a method that utilizes the above reaction pathways (especially equations 2 - 9) to convert and/or store CO₂ into mafic and ultramafic rocks, as defined above, as a first aspect of the invention. The proposed method also enhances the above reaction rates leading to complete mineralization of total injected CO₂ volumes within two to twelve months from injection. The invention also discloses various operating conditions such as temperature, pressure, flowrate (depends on rock permeability), etc. that affect the process efficiency, and at which improved sequestration is obtained. Some embodiments of the present invention also cover engineering aspects such as utilizing renewable energy, water looping / recycling, and process configuration and design.

### EXAMPLES

### Example 1. Generating nanobubbles

In an experimental set-up, nanobubbles were produced by introducing pressurized CO₂ into a nanobubble generator operating according to the membrane principle. CO₂ gas from a gas cylinder at a pressure of 2, 3 and 4 barG was mixed with tap water at room temperature. During operation of the nanobubble generator, the temperature increased to about 40 - 60 °C. Water pressure was maintained at 1.2 - 1.3 barG.

The size and amount of nanobubbles was determined using a particle analyzer (NanoSight NS300, Malvern Panalytical Ltd., UK) and found to be in the interval of 60 - 450 nm. The concentration of nanobubbles was pressure dependent, as shown in Fig. 5, where the chart shows the number of bubbles per ml water at a pressure of 2, 3 and 4 barG.

### Example 2. Investigating the stability of nanobubbles

Samples of the water-nanobubble mixture were stored in room temperature and inspected at regular intervals. The nanobubbles were found to be stable or metastable, remaining suspended in water for at least 15 days.

### Example 3. Injecting CO₂ - fluid mixture into rock formation

At least two boreholes are drilled into a rock formation comprising mafic or ultramafic rock, forming an injection well and an observation well. The injection well is sealed upwards at a depth of about 900 mbgl, depending on the exact height of the layer of mafic or ultramafic rock. Water is collected from a suitable source, for example pumped from the observation well and saturated with CO₂ nanobubbles. An environmentally safe indicator substance, for example a fluorescent dye, is added to the water containing CO₂ nanobubbles, and the mixture is pumped into an injection well at a flow rate of approximately 18 l/min and a pressure of 40 bar using booster pumps. Water is sampled from an observation well reaching the same depth, and the presence of said indicator substance, e.g. a fluorescent dye, is taken as proof that the water originates from the injection well. The CO₂ concentration is analyzed, and the results used to determine the degree of mineralization taking place between the injection well and the observation well.

## Claims

1. A method of carbon dioxide mineralization and storage
**characterized in that** the method comprises:
- generating CO₂ nanobubbles in a fluid forming a carbon dioxide and fluid mixture,
- injecting said mixture into a rock formation comprising mafic or ultramafic rock via an injection well (220) wherein the carbon dioxide and fluid mixture is flowed through said injection well (220) or an injection well casing disposed in the rock formation,
- reacting carbon dioxide in said carbon dioxide and fluid mixture with said rock formation to form calcites and magnesites in the rock formation; and
- recycling at least a portion of the fluid from said rock formation via an observation well (230).

2. The method of claim 1, **characterized in that** the CO₂ nanobubbles are generated using a nanobubble membrane generator (141, 142).

3. The method of claim 1, **characterized in that** the injection well (220) and/or injection well casing has a plurality of longitudinal perforations at a depth of 25 m to 4 km in said rock formation.

4. The method of claim 1, **characterized in that** said fluid mixture comprises at least one aqueous fluid selected from the group consisting of water, seawater, and brackish water.

5. The method of claim 4, **characterized in that** said fluid mixture comprises a conservative tracer.

6. The method of claim 2, **characterized in that** said nanobubble generator comprises: a pump (1), an inlet (2), a gas pressure gauge (3), a gas connection (4), a gas flow meter (5), a pump pressure gauge (6), and a discharge flow valve (7).

7. The method of claim 2, **characterized in that** the CO₂ nanobubble generator operates at a pressure in an interval of 1 - 1000 bar, preferably 5 - 500 bar, such as 25 - 100 bar.

8. The method of claim 1, **characterized in that** the CO₂ nanobubbles have an average diameter of about about 10 - 900 nm.

9. The method of claim 1, **characterized in that** said injection (220) and observation (230) wells have substantially the same depth.

10. The method of claim 3, further **characterized in that** said method comprises a step of adjusting the fluid flow rate at one or more permeable zones by selecting a length and a distribution of the longitudinal perforations .

11. The method of claim 10, **characterized in that** the length of the longitudinal perforations is at least 15 cm and the distribution along the injection well casing is adapted to the depth and extent of said one or more permeable zones.

12. The method of claim 1, **characterized in that** during the injecting, a high-pressure zone is created within said injection well (220) below a packed off interval and a low-pressure zone is created during the recycling through the observation well.

13. The method of claim 1, **characterized in that** carbon dioxide and fluid mixture flows from a high-pressure zone to a low-pressure zone and a fluid volume of the carbon dioxide and water mixture is recycled back through at least one observation well.

14. The method according to any one of the claims above, **characterized in that** the rate of mineralization is enhanced by heating the water before pumping it into the mafic or ultramafic layer.

15. A system for carbon dioxide mineralization and storage
**characterized in that** the system comprises a nanobubble generator (141,142), a water storage module (210) or buffer tank (110), pumps (120), at least two boreholes, wherein said pumps (120) are arranged to inject a mixture of CO₂ nanobubbles and water into one borehole, and to recover water from another borehole, recirculating water to said water storage module (210) or buffer tank (110).

## Patentansprüche

1. Verfahren zur Kohlendioxidmineralisierung und -speicherung,
**dadurch gekennzeichnet, dass** das Verfahren Folgendes umfasst:
- Erzeugen von CO₂-Nanoblasen in einem Fluid und dadurch Ausbilden eines Kohlendioxid-Fluid-Gemischs,
- Injizieren des Gemischs in eine Gesteinsformation, die mafisches oder ultramafisches Gestein umfasst, über eine Injektionsbohrung (220), wobei das Kohlendioxid-Fluid-Gemisch durch die Injektionsbohrung (220) oder eine Injektionsbohrlochverrohrung, die in der Gesteinsformation angeordnet ist, geleitet wird,
- Zur-Reaktion-Bringen des Kohlendioxids in dem Kohlendioxid-Fluid-Gemisch mit der Gesteinsformation, um Calcite und Magnesite in der Gesteinsformation auszubilden; und
- Rückführen wenigstens einer Teilmenge des Fluids aus der Gesteinsformation über eine Beobachtungsbohrung (230) .

2. Verfahren nach Anspruch 1, **dadurch gekennzeichnet, dass** die CO₂-Nanoblasen mit einem Nanoblasen-Membrangenerator (141, 142) erzeugt werden.

3. Verfahren nach Anspruch 1, **dadurch gekennzeichnet, dass** die Injektionsbohrung (220) und/oder die Injektionsbohrlochverrohrung mehrere längs verlaufende Durchbrüche in einer Tiefe von 25 m bis 4 km in der Gesteinsformation aufweist.

4. Verfahren nach Anspruch 1, **dadurch gekennzeichnet, dass** das Fluidgemisch wenigstens ein wässriges Fluid umfasst, das aus der Gruppe bestehend aus Wasser, Meerwasser und Brackwasser ausgewählt ist.

5. Verfahren nach Anspruch 4, **dadurch gekennzeichnet, dass** das Fluidgemisch eine herkömmliche Markierungssubstanz umfasst.

6. Verfahren nach Anspruch 2, **dadurch gekennzeichnet, dass** der Nanoblasengenerator Folgendes umfasst: eine Pumpe (1), einen Einlass (2), einen Gasdruckmesser (3), einen Gasanschluss (4), einen Gasdurchflussmesser (5), einen Pumpendruckmesser (6) und ein Ausströmventil (7).

7. Verfahren nach Anspruch 2, **dadurch gekennzeichnet, dass** der CO₂-Nanoblasen-Generator bei einem Druck in einem Bereich von 1 - 1000 bar, vorzugsweise 5 - 500 bar, wie etwa 25 - 100 bar, arbeitet.

8. Verfahren nach Anspruch 1, **dadurch gekennzeichnet, dass** die CO₂-Nanoblasen einen mittleren Durchmesser von etwa 10 - 900 nm aufweisen.

9. Verfahren nach Anspruch 1, **dadurch gekennzeichnet, dass** die Injektionsbohrung (220) und die Beobachtungsbohrung (230) im Wesentlichen die gleiche Tiefe aufweisen.

10. Verfahren nach Anspruch 3, ferner **dadurch gekennzeichnet, dass** das Verfahren einen Schritt des Einstellens des Fluiddurchflusses in einem oder mehreren durchlässigen Bereichen durch Auswählen einer Länge und einer Verteilung der längs verlaufenden Durchbrüche umfasst.

11. Verfahren nach Anspruch 10, **dadurch gekennzeichnet, dass** die Länge der längs verlaufenden Durchbrüche wenigstens 15 cm beträgt und die Verteilung entlang der Injektionsbohrlochverrohrung an die Tiefe und die Erstreckung des einen oder der mehreren durchlässigen Bereiche angepasst ist.

12. Verfahren nach Anspruch 1, **dadurch gekennzeichnet, dass** während des Injizierens ein Hochdruckbereich innerhalb der Injektionsbohrung (220), unter einem abgesperrten Abschnitt, erzeugt wird und während des Rückführens durch die Beobachtungsbohrung ein Niederdruckbereich erzeugt wird.

13. Verfahren nach Anspruch 1, **dadurch gekennzeichnet, dass** das Kohlendioxid-Fluid-Gemisch von einem Hochdruckbereich zu einem Niederdruckbereich strömt und ein Fluidvolumen des Kohlendioxid-Wasser-Gemischs durch wenigstens eine Beobachtungsbohrung zurückgeführt wird.

14. Verfahren nach einem der vorhergehenden Ansprüche, **dadurch gekennzeichnet, dass** die Mineralisierungsrate durch Erwärmen des Wassers vor dem Pumpen desselben in die mafische oder ultramafische Schicht verbessert wird.

15. System zur Kohlendioxidmineralisierung und -speicherung,
**dadurch gekennzeichnet, dass** das System einen Nanoblasengenerator (141, 142), ein Wasserspeichermodul (210) oder einen Puffertank (110), Pumpen (120) und wenigstens zwei Bohrungen umfasst, wobei die Pumpen (120) dazu eingerichtet sind, ein Gemisch aus CO₂-Nanoblasen und Wasser in eine Bohrung zu injizieren und Wasser aus einer anderen Bohrung zurückzugewinnen, wobei das Wasser zu dem Wasserspeichermodul (210) oder dem Puffertank (110) zurückgeführt wird.

## Revendications

1. Procédé de minéralisation et de stockage du dioxyde de carbone **caractérisé en ce que** le procédé comprend :
- la génération de nanobulles de CO₂ dans un fluide formant un mélange de dioxyde de carbone et de fluide,
- l'injection de ce mélange dans une formation rocheuse comprenant des roches mafiques ou ultramafiques par l'intermédiaire d'un puits d'injection (220) dans lequel le mélange de dioxyde de carbone et de fluide s'écoule à travers ledit puits d'injection (220) ou un tubage de puits d'injection disposé dans la formation rocheuse,
- la réaction du dioxyde de carbone dans ledit mélange de dioxyde de carbone et de fluide avec ladite formation rocheuse pour former des calcites et des magnésites dans la formation rocheuse ; et
- le recyclage d'au moins une partie du fluide de ladite formation rocheuse par l'intermédiaire d'un puits d'observation (230).

2. Procédé selon la revendication 1, **caractérisé en ce que** les nanobulles de CO₂ sont générées à l'aide d'un générateur à membrane de nanobulles (141, 142).

3. Procédé selon la revendication 1, **caractérisé en ce que** le puits d'injection (220) et/ou le tubage du puits d'injection présente une pluralité de perforations longitudinales à une profondeur comprise entre 25 m et 4 km dans ladite formation rocheuse.

4. Procédé selon la revendication 1, **caractérisé en ce que** ledit mélange de fluides comprend au moins un fluide aqueux choisi dans le groupe constitué par l'eau, l'eau de mer et l'eau saumâtre.

5. Procédé selon la revendication 4, **caractérisé en ce que** ledit mélange de fluides comprend un traceur conservateur.

6. Procédé selon la revendication 2, **caractérisé en ce que** ledit générateur de nanobulles comprend : une pompe (1), une entrée (2), un manomètre de gaz (3), un raccord de gaz (4), un débitmètre de gaz (5), un manomètre de pompe (6), et une vanne de débit de refoulement (7).

7. Procédé selon la revendication 2, **caractérisé en ce que** le générateur de nanobulles de CO₂ fonctionne à une pression comprise dans un intervalle compris entre 1 et 1000 bar, de préférence compris entre 5 et 500 bar, tel que compris entre 25 et 100 bar.

8. Procédé selon la revendication 1, **caractérisé en ce que** les nanobulles de CO₂ ont un diamètre moyen compris entre 10 et 900 nm environ.

9. Procédé selon la revendication 1, **caractérisé en ce que** lesdits puits d'injection (220) et d'observation (230) ont sensiblement la même profondeur.

10. Procédé selon la revendication 3, **caractérisé en outre en ce que** ledit procédé comprend une étape d'ajustement du débit de fluide au niveau d'une ou de plusieurs zones perméables en sélectionnant une longueur et une distribution des perforations longitudinales.

11. Procédé selon la revendication 10, **caractérisé en ce que** la longueur des perforations longitudinales est d'au moins 15 cm et la répartition le long du tubage du puits d'injection est adaptée à la profondeur et à l'étendue de ladite ou desdites zones perméables.

12. Procédé selon la revendication 1, **caractérisé en ce que** pendant l'injection, une zone de haute pression est créée à l'intérieur dudit puits d'injection (220) en dessous d'un intervalle conditionné et une zone de basse pression est créée pendant le recyclage à travers le puits d'observation.

13. Procédé selon la revendication 1, **caractérisé en ce que** le mélange de dioxyde de carbone et de fluide s'écoule d'une zone à haute pression vers une zone à basse pression et qu'un volume de fluide du mélange de dioxyde de carbone et d'eau est recyclé à travers au moins un puits d'observation.

14. Procédé selon l'une quelconque des revendications précédentes, **caractérisé en ce que** la vitesse de minéralisation est améliorée en chauffant l'eau avant de la pomper dans la couche mafique ou ultramafique.

15. Système de minéralisation et de stockage du dioxyde de carbone **caractérisé en ce que** le système comprend un générateur de nanobulles (141, 142), un module de stockage d'eau (210) ou un réservoir tampon (110), des pompes (120), au moins deux trous de forage, dans lequel lesdites pompes (120) sont agencées pour injecter un mélange de nanobulles de CO₂ et d'eau dans un trou de forage, et pour récupérer l'eau d'un autre trou de forage, en faisant recirculer l'eau dans ledit module de stockage d'eau (210) ou dans ledit réservoir tampon (110) .
